# EUROPEAN PATENT SPECIFICATION

(11) **EP 0 845 204 B1**
(45) Date of publication and mention of the grant of the patent: **24.07.2002**
(21) Application number: 97120681.8
(22) Date of filing: 26.11.1997
(51) Int. Cl.: A01G 13/06

(54) **Method and apparatus for frost control in agriculture and fruit production**
Verfahren und Vorrichtung zur Frostbekämpfung in Landwirtschaft und Obsterzeugung
Méthode et appareil pour la prévention du gel en agriculture et arboriculture

(30) Priority: 27.11.1996 CL 207496
(43) Date of publication of application: 03.06.1998
(73) Proprietor: Lazo Barra, Florencio, Rosario (CL)
(72) Inventor: Lazo Barra, Florencio, Rosario (CL)
(74) Representative: Hoeger, Stellrecht & Partner

(56) References cited:
- FR-A- 1 511 852
- US-A- 2 602 267
- US-A- 3 201 098
- US-A- 3 210 059
- US-A- 3 749 551

## Description

The invention relates to a method for frost control in agriculture and fruit production and to an apparatus for carrying out this method.

Frosts are a major problem during spring time because this is the time when crops are more vulnerable.

There are two different types of frost: radiative frost, and advective freeze. The former is produced when the earth loses heat during clear nights. It is the inverse process to the earth heating during the day by solar radiation. In this case it is the earth that irradiates heat to the atmosphere. The air gets colder from the bottom to the top very slowly. Therefore lower air layers have a lower temperature than upper layers. Hence people talk about thermal inversion layer, which is placed at about ten meters (thirty feet) from the ground, and thirty meters thick. It is 5°C hotter than the ground level temperature. Over this layer temperature decreases again. The latter, advective freeze, occurs when a mass of cold air or polar air comes to the crop or orchard.

Mankind has looked for how to fight frost effects. The most common are the use of firewood, fuel heaters, windmills or propellers, the use of helicopters flying over the orchards, etc.

The heaters are very effective to control frosts, but they have the inconvenience of their high operation cost because of the great fuel consumption since they are very inefficient. They heat the air to very high temperatures, which goes up quickly causing the "chimney effect". Thus, we have no radiative effect to the surrounding air. Great fuel consumption is required and great contamination is produced as well.

The other systems are the helicopters and the propellers. They both blow hotter air from the inversion layer and then this hot air is mixed with the colder air from down below, closer to the ground.

Besides these systems, the inventor knows about a patented system in Uruguay, thought to protect citrus plantations. This system is also based on the idea of taking hotter air from the inversion layer, using a funnel which is ten meters high or more and which has a fan on its bottom part by which cold air passes through and makes hotter air come down to crop or orchard.

The inventor also knows about a grower from the El Olivar county who has used an axial fan belonging to a turbo atomizer to which he put a heater in order to blow hot air to his vineyards. He abandoned this idea because the area under control was too small. The inventor tried something similar about five years ago with no useful results.

The inventor has the information also of the Chilean patent application No. 682-94, in which the use of a moving machine that blows hot air transported by a tractor is told. The grower talks about the drawings but they were never shown. He also tells about a fan in which one can modify the angle of attack of its blades. Therefore it is clear that it is an axial fan, similar to the one the grower from El Olivar used, and the one the inventor used before in his first experiments as well.

With the development of new irrigation techniques, sprinklers are being used to wet the crop we want to protect. But the problem now is that in some cases it is not convenient to wet the crop or the tree for potential fungal diseases or sometimes we might not have enough water at this time of the year (winter time).

The inventor has searched in the CAB Abstracts system, at Universidad Católica, finding 147 articles under the command "frost protection". Only two of them mentioned something about a specific device to control frost. It was published in 1991, in "Tractory-i-Sel' skokhosyainestevennye-Mashiny" in the Russian Republic of Georgia. It talks about a stationary machine, the YOP-2, and the YOP-2M which is movable.

The former is a machine placed on a tower, which blows hot air through a rotating tube of 1 meter diameter, covering a 200 meters radius area. This system has an advantage over the traditional fans or propellers, which are not effective in advective frosts (freeze). This movable machine goes over a cart and it produces fog that throws over the field. With this purpose it uses 90 to 100 metric tons (MT) of water per hectare.

U.S. patent 2,602,267 discloses a method according to the preamble portion of claim 1 and an apparatus for carrying out said method, according to the preamble portion of claim 8. The method disclosed in U.S. patent 2,602,267 is carried out using two axial fans which are spaced apart along the moving direction of the heating and blowing system. These fans expel the air in a very turbulent way. Further, part of the hot air being blown from one of the fans will be drawn back by the other fan, thereby establishing a transverse circulation of the hot air and limiting the reach thereof.

It is the object of the invention to provide an improved method for efficient frost control in agriculture and fruit production, and to provide an apparatus for carrying out this method.

This object is accomplished by means of the method of claim 1 and the apparatus of claim 8, respectively.

Dependent claims 2 to 7 refer to particular embodiments of the method according to the invention; dependent claims 9 and 10 refer to particular embodiments of the apparatus according to the invention.

The method according to the invention is totally new and totally different to those currently used. This method is that by the use of an appropriate machine we can insert a layer or bag of hot air in the cold air mass. This was achieved thanks to the use of a centrifugal fan, with two exits, with a heater, that travels across the field on a tractor, at a speed of about 10 km per hour. The air is thrown or blown aerodynamically clean, it means with no turbulence, which lets it get a great distance, and form what we could call a hot air bag. This bag stays low, travelling by the crop or orchard in the same direction it was thrown by the fan, due to the inertia it has.

The air leaves the machine at 80°C. It mixes quickly with the cold air and thus, at approximately 2 meters it has already lowered its temperature to about 25°C. At 10 meters (Mts.), the temperature is never over 10°C. At this distance the horizontal speed that the air has is high so it keeps going in that direction, but it does not go any further up. As the speed decreases, the difference in temperature between this and the surrounding air also decreases. They have similar densities what makes the air continue going horizontally and at the same height.

Here is the main difference compared with the methods explained before, the idea of which is nothing other than mixing the supposed hotter air at the inversion layer with the colder air in contact with the crop. They are very efficient at mixing air since the air they blow is very turbulent. Those axial fans or propellers, like in the Chilean patent application 682-904, and of the grower from El Olivar, do not have practical results, since the area they can control is too small, this because they mix the air and they cannot form that layer or bag of hot air that the method according to the invention can do.

For a better understanding of this method, we can say that it is possible to produce or create, in an artificial way, a low height thermal inversion layer, beneath the actual thermal inversion layer, or to create one in advective freeze cases, since that layer does not exist.

The inventor has carried out some experiments in his table grape vineyard and in his plum orchards in severe frost conditions with amazing results.

The inventor used a 5 hectare vineyard block as field test, each one on table grapes. Every block is separated by a road in between, and they have also a lateral road by their side. The tractor carrying the machine travelled by the road that surrounded the central block, i.e. it blew the air towards the central block and also towards the one at its north side and towards the one at its south side as well.

The inventor obtained a constant pattern of results after the host of measurements he carried out. After every passage of the tractor with the machine the temperature rose 0.5°C at a distance of 50 meters (Mts.), which began to lose temperature afterwards due to the normal radiation loss. Hence, the tractor has to pass over the same spot every ten minutes, time needed to lose the heat the machine gave and get to the temperature it had before (this is the same frequency that the helicopters need). The machine controls an area of 50 meters (Mts.) along both sides, but as was said before, a sort of hot air bag is formed, which is pushed with a new turn of the tractor blowing hot air again. It keeps moving horizontally in the same direction it was thrown since the beginning. The amazing result is that we can produce a sort of microclimate inside the vineyard, which stays with temperatures from over 0.3°C at the coldest part to 1.2°C at the hottest part of the field test area. The temperatures outside the area under treatment were at below -2,5°C.

The experiments carried out at the plum orchard got similar results. This is a 15 hectare orchard, variety Red Beaut (Red Beauty), which was severely affected last season with the September 6th frost. The inventor estimated 30.000 boxes yield, and he just harvested 214 boxes. The orchard is divided into two blocks, 7.5 hectare each, separated by a road in between. In this case the inventor's strategy was to pass the machine only by the central road. The hot air bag or hot layer effect was definitely confirmed, since after simultaneous turns of the tractor the inventor could measure, using very sensitive digital thermometers, up to a distance of 120 meters (Mts.) on both sides of the central road. In the case of the point 120 meters (Mts.) far the temperature was 0.3°C which got to the same temperature they had before in about ten minutes. It was very easy to handle a temperature of the orchard over 0.5°C while the temperature outside the test area was -1.9°C.

It has to be emphasized that the tests have been done under radiative frost and also under advective freeze conditions, getting fairly similar results in both treatments.

The fuel used here is liquid gas, which goes inside of four 40 kg cylinders each, which allows a working time of five hours, being more than enough to fight the most severe springtime frost.

As a way to improve the temperature control the inventor switched the heaters from the exit of the blowing tube to the entrance of the cold air in the back part of the machine.

Other and further features and advantages of the invention will appear from the following description and the accompanying drawings.
- Figure 1: is a side view of a fan and heater system used in the invention and mounted on a platform or trailer attached to a tractor;
- Figure 2: is a rear view of the fan and heater system of Fig. 1;
- Figure 3: is a view similar to Fig. 2 but showing a belt and pulley system by which rotational force is applied to the fan of the fan and heater system;
- Figure 4: is a sectional view showing fan blades of the fan and heater system;
- Figure 5: is a side view of the fan and heater system showing the cold air intake and the hot air exit;
- Figure 6: is a side elevational view showing a slightly modified fan and heater system construction;
- Figure 7: is a rear view of the system shown in Fig. 6.

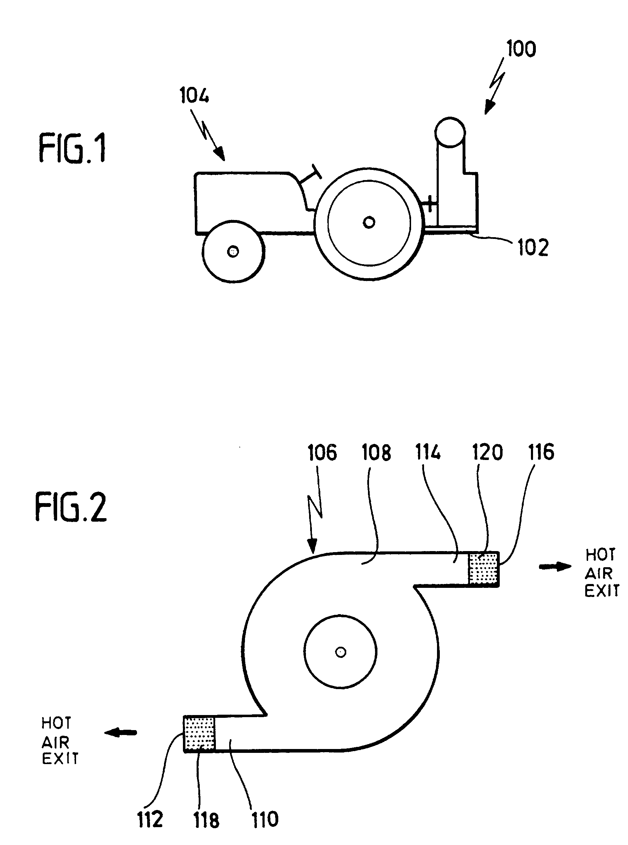

Referring now to Fig. 1 of the drawings, a heating and blowing system which is indicated generally by the reference numeral 100 is mounted on a platform 102 attached to a tractor 104.

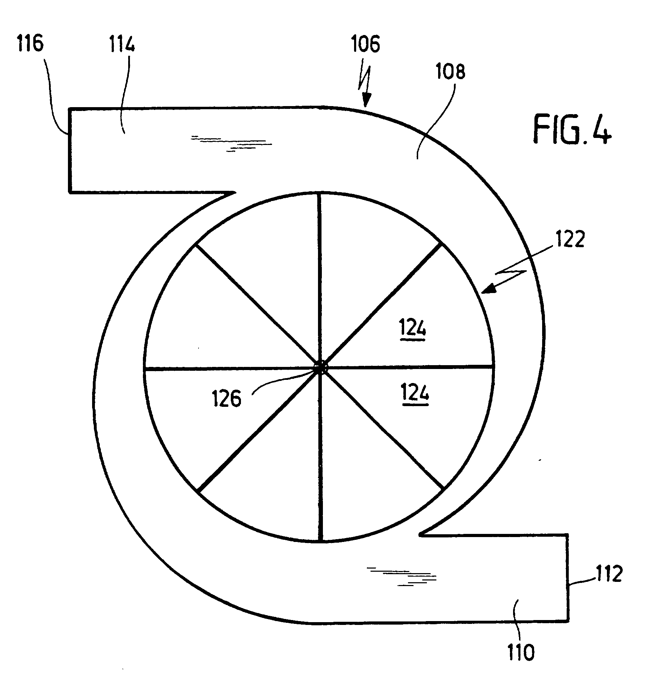

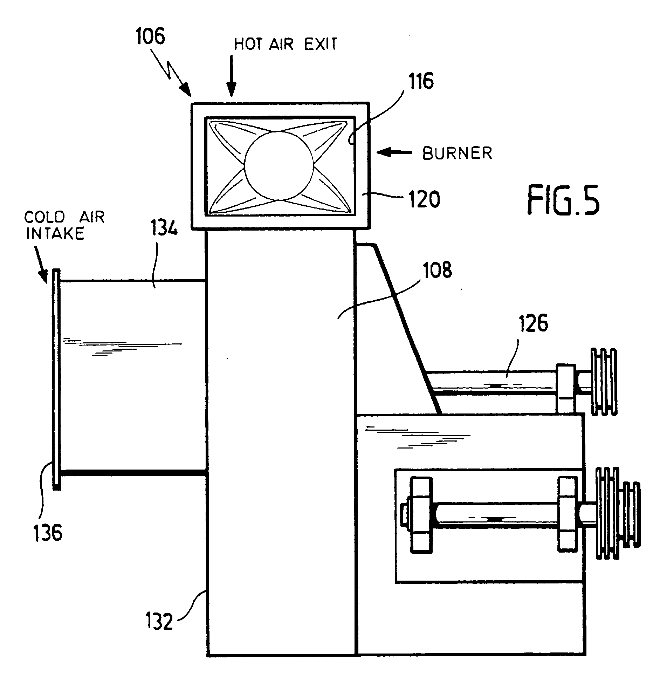

As shown in Figs. 2 to 5, the heating and blowing system 100 comprises a centrifugal fan 106 having a essentially cylindrical housing 108 which is provided, at its circumference, with a lower blowing tube 110 ending in a lower exit 112 for hot air and an upper blowing tube 114 ending in an upper exit 116 for hot air. The lower blowing tube 110 and the upper blowing tube 114 are arranged so as to direct in opposite, essentially horizontal directions.

Liquid gas or petroleum heaters 118 and 120 are arranged near the lower exit 112 for hot air and the upper exit 116 for hot air, respectively.

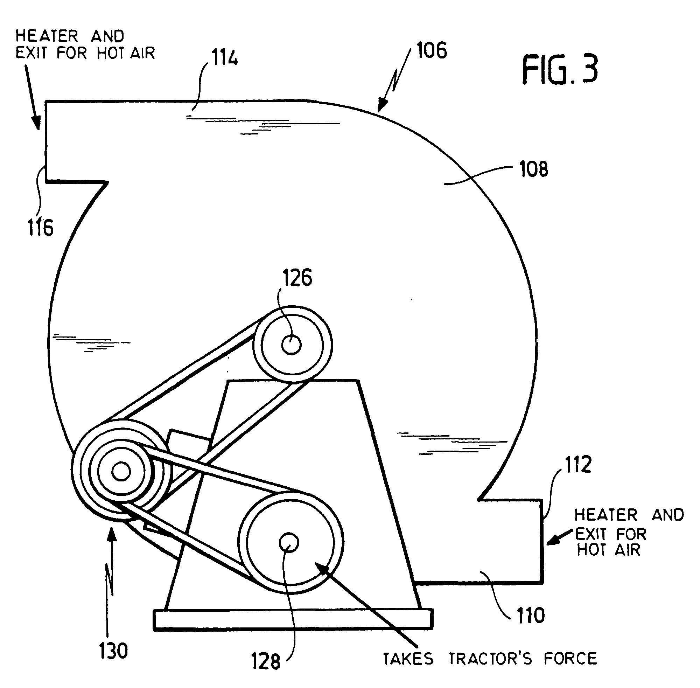

A rotor element 122 of the centrifugal fan 106 having fan blades 124 is arranged within the central part of the housing 108 and mounted on a fan drive shaft 126 which extends along the axial direction of the housing 108 and is rotatably supported therein. The fan drive shaft 126 is operatively connected to a main drive shaft 128 of the tractor 104 via a belt and pulley system 130 (cf. Fig. 3).

A back end face 132 of the housing 108 is provided with a cold air intake tube 134 extending along the radial direction of the housing 108, having a cold air entrance 136 at the end facing away from the housing 108 and opening into the interior of the housing 108 at the other end.

For carrying out the method according to the invention, the engine of the tractor 104 is started, and the tractor 104 is driven along a road separating two fields, one to the left of the road and the other to the right thereof.

The engine of the tractor 104 rotationally drives the main drive shaft 128. The rotational motion thereof is transmitted via the belt and pulley system 130 to the fan drive shaft 126 which drives the rotor element 122 carrying the fan blades 124 for rotation within the housing 108 of the centrifugal fan 106. Thus, cold air from the environment is taken in through the cold air entrance 136 and the cold air intake tube 134 into the interior of the housing 108, from where it is expelled by the action of the fan blades 124 through the lower blowing tube 110 and the upper blowing tube 114. When passing through the blowing tubes 110 and 114 the air is heated by the heaters 118 and 120, respectively.

The hot air mass exiting through the lower exit 112 for hot air is thrown in a hot air stream which is aerodynamically clean so that it gets into the cold air mass lying over the field and forms a hotter air bag or layer. As the rotational axis of the rotor element 122 of the centrifugal fan 106 essentially corresponds to the direction of motion of the tractor 104, the hotter air bag formed by the hot air mass exiting from the lower exit 112 for hot air travels over the field on the left side of the road in an essentially horizontal direction without rising.

Thus, as the tractor 104 moves along the road, the hot air exiting from the lower exit 112 for hot air creates an artificial low thermal inversion layer above the field on the left side of the road.

In an analogous manner, the hot air exiting from the upper exit 116 for hot air forms an artificial low thermal inversion layer above the field on the right side of the road.

As the centrifugal fan 106 is arranged on the platform 102 of the tractor 104 at a height corresponding to the height of the fruiting zones of the fields, the aforementioned artificial inversion layers provide an efficient protection for the crop from radiative frost or advective freeze.

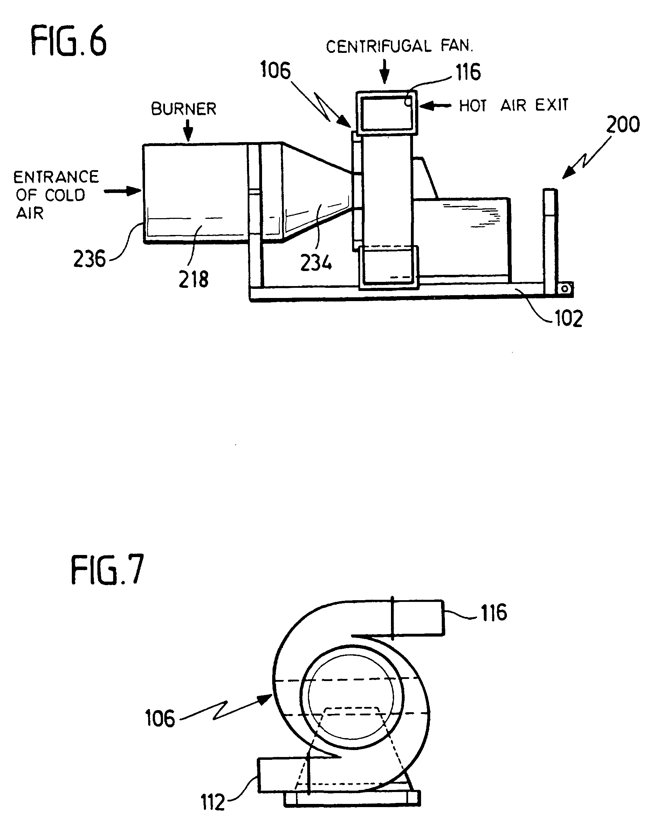

Another embodiment of a heating and blowing system 200 is shown in Figs. 6 and 7, wherein identical or functionally equivalent elements are designated with the same reference numerals as in Figs. 1 to 5.

The heating and blowing system shown in Figs. 6 and 7 differs from the heating and blowing system shown in Figs. 1 to 5 in that the essentially cylindrical cold air intake tube 134 is replaced by a funnel-like cold air intake tube 234 connecting the cold air entrance 236 with the interior of the housing 108 of the centrifugal fan 106.

Further, instead of the heaters 118 and 120 situated near the lower exit 112 and the upper exit 116 for hot air, respectively, the heating and blowing system 200 is provided with a burner 218 arranged near the cold air entrance 236. Thus, in this embodiment of the heating and blowing system 200, the air taken into the centrifugal fan 106 is heated by means of the burner 218 before being exposed to the fan blades 124 of the rotor element 122 of the centrifugal fan 106.

This improves the control of the temperature of the hot air exiting from the lower exit 112 and the upper exit 116 for hot air.

With regard to the remaining structure and functions, the heating and blowing system 200 shown in Figs. 6 and 7 is identical with the heating and blowing system 100 shown in Figs. 1 to 5, so that, for the remaining structural elements and functions, reference is made to the above descriptions of the heating and blowing system 100.

As described above, the method for frost control in agriculture and pomology according to the invention consists of pushing a hot air mass through the cold air mass affecting the crop or orchard by using a machine designed for this purpose. According to this method, cold air is taken, heated and then thrown over the field from a moving tractor. This is done by a machine that basically consists of a centrifugal fan having two exits and a liquid gas or petroleum heater at the entrance for the cold air.

Differently from the known methods, with this method hot air is thrown in an aerodynamically clean stream, which lets it get into the cold air mass and form a hotter air bag or layer.

Further, a hotter air mass is formed which travels in the direction in which it was blown from the machine, covering a significant area, which makes the system economically viable, and represents a great advance in frost protection, on account of both its low cost and its high effectiveness.

As a difference from the known methods, the method according to the invention does not try to mix the air, but instead creates an artificial low thermal inversion layer beneath the natural layer. In the case of advective freeze, where there is no inversion layer, it creates one at the height of the fruiting zone.

## Claims

1. A method for frost control in agriculture and fruit production comprising the steps of:
- taking in cold air into a heating and blowing system (100; 200);
- heating the air;
- throwing the heated air out of the blowing system over a field, thereby pushing a hot air mass through the cold air mass affecting the crop or orchard; and
- moving the heating and blowing system (100; 200) relative to the field;
said method **characterized in that** the heating and blowing system (100; 200) comprises a centrifugal fan (106) having two exits (112; 116).

2. The method according to claim 1, wherein the heated air is thrown out of the heating and blowing system (100; 200) in an aerodynamically clean stream forming a hotter air bag or layer in the cold air mass.

3. The method according to claim 1 or 2, wherein the hot air is thrown out of the heating and blowing system (100; 200) such that it travels in an essentially horizontal direction in which it is blown from the heating and blowing system (100; 200).

4. The method according to any of claims 1 to 3, wherein the hot air is thrown out of the heating and blowing system (100; 200) such that it creates an artificial low thermal inversion layer, preferably at the height of a fruiting zone.

5. The method according to any of claims 1 to 4, wherein the centrifugal fan (106) comprises a lower blowing tube (110) ending in a lower exit (112) for hot air and an upper blowing tube (114) ending in an upper exit (116) for hot air, the lower blowing tube (110) and the upper blowing tube (114) being arranged so as to direct in opposite, essentially horizontal directions.

6. The method according to any of claims 1 to 5, wherein the air is heated by a liquid gas or petroleum heater (218), which is preferably arranged at a cold air entrance (236) of the heating and blowing system (200).

7. The method according to any of claims 1 to 6, wherein the heating and blowing system (100; 200) is mounted on a land vehicle, preferably a tractor (104), and/or a trailer of a land vehicle.

8. Apparatus for carrying out the method according to any of claims 1 to 7, comprising a fan (106) and a heater (118, 120; 218), the fan (106) and the heater (118, 120; 218) being mounted on a land vehicle (104) or a trailer for a land vehicle, said apparatus **characterized in that** the fan is a centrifugal fan (106) with two exits (112; 116).

9. Apparatus according to claim 8, wherein the centrifugal fan (106) comprises a lower blowing tube (110) ending in a lower exit (112) for hot air and an upper blowing tube (114) ending in an upper exit (116) for hot air, the lower blowing tube (110) and the upper blowing tube (114) being arranged so as to direct in opposite, essentially horizontal directions.

10. Apparatus according to claim 8 or 9, wherein the heater is a liquid gas or petroleum heater (218) which is preferably located at a cold air entrance (236) of the heating and blowing system (200).

## Patentansprüche

1. Verfahren zur Frostbekämpfung in Landwirtschaft und Obsterzeugung, umfassend folgende Verfahrensschritte:
- Einbringen kalter Luft in ein Heizungs- und Gebläsesystem (100; 200);
- Erwärmen der Luft;
- Auswerfen der erwärmten Luft aus dem Gebläsesystem über ein Feld, wodurch eine warme Luftmasse durch die auf die Feldfrucht oder die Obstkultur einwirkende kalte Luftmasse geschoben wird; und
- Bewegen des Heizungs- und Gebläsesystems (100; 200) relativ zu dem Feld;
wobei das Verfahren **dadurch gekennzeichnet ist, daß** das Heizungs- und Gebläsesystem (100; 200) ein Zentrifugalgebläse (106) mit zwei Ausgängen umfaßt.

2. Verfahren nach Anspruch 1, wobei die erwärmte Luft in einem aerodynamisch störungsfreien Strom, der eine wärmere Lufttasche oder -schicht in der kalten Luftmasse bildet, aus dem Heizungs- und Gebläsesystem (100; 200) ausgeworfen wird.

3. Verfahren nach einem der Ansprüche 1 oder 2, wobei die warme Luft in der Weise aus dem Heizungs- und Gebläsesystem (100; 200) ausgeworfen wird, daß sie sich in einer im wesentlichen horizontalen Richtung fortbewegt, in die sie von dem Heizungs- und Gebläsesystem (100; 200) ausgeblasen wird.

4. Verfahren nach einem der Ansprüche 1 bis 3, wobei die warme Luft in der Weise aus dem Heizungs- und Gebläsesystem (100; 200) ausgeworfen wird, daß sie eine künstliche niedrige thermische Inversionsschicht, vorzugsweise in der Höhe einer Fruchttragezone, schafft.

5. Verfahren nach einem der Ansprüche 1 bis 4, wobei das Zentrifugalgebläse (106) ein unteres Gebläserohr (110), das in einem unteren Ausgang (112) für heiße Luft endet, und ein oberes Gebläserohr (114), das in einem oberen Ausgang (116) für heiße Luft endet, umfaßt, wobei das untere Gebläserohr (110) und das obere Gebläserohr (114) so angeordnet sind, daß sie in entgegengesetzte, im wesentlichen horizontale Richtungen weisen.

6. Verfahren nach einem der Ansprüche 1 bis 5, wobei die Luft mittels einer Flüssiggas- oder Petroleum-Heizeinrichtung (218), die vorzugsweise an einem Kaltlufteintritt (236) des Heizungs- und Gebläsesystems (200) angeordnet ist, erwärmt wird.

7. Verfahren nach einem der Ansprüche 1 bis 6, wobei das Heizungs- und Gebläsesystem (100; 200) auf einem Landfahrzeug, vorzugsweise auf einem Traktor (104), und/oder auf einem Anhänger eines Landfahrzeugs angeordnet ist.

8. Vorrichtung zur Durchführung des Verfahrens nach einem der Ansprüche 1 bis 7, umfassend ein Gebläse (106) und eine Heizeinrichtung (118, 120; 218), wobei das Gebläse (106) und die Heizeinrichtung (118, 120; 218) auf einem Landfahrzeug (104) oder auf einem Anhänger für ein Landfahrzeug angeordnet sind, wobei die Vorrichtung **dadurch gekennzeichnet ist, daß** das Gebläse ein Zentrifugalgebläse (106) mit zwei Ausgängen (112; 116) ist.

9. Vorrichtung nach Anspruch 8, wobei das Zentrifugalgebläse (106) ein unteres Gebläserohr (110), das in einem unteren Ausgang (112) für heiße Luft endet, und ein oberes Gebläserohr (114), das in einem oberen Ausgang (116) für heiße Luft endet, umfaßt, wobei das untere Gebläserohr (110) und das obere Gebläserohr (114) so angeordnet sind, daß sie in entgegengesetzte, im wesentlichen horizontale Richtungen weisen.

10. Vorrichtung nach einem der Ansprüche 8 oder 9, wobei die Heizeinrichtung eine Flüssiggas- oder Petroleum-Heizeinrichtung (218) ist, die vorzugsweise an einem Kaltlufteintritt (236) des Heizungs- und Gebläsesystems (200) angeordnet ist.

## Revendications

1. Procédé de contrôle des gelées dans l'agriculture et dans la production des fruits, qui comprend les étapes consistant à :
prendre de l'air froid et le conduire à un système de chauffage et de soufflage (100 ; 200) ;
chauffer l'air ;
souffler l'air chauffé hors du système de chauffage sur un champ, donc pousser une masse d'air chaud dans la masse d'air froid affectant la culture ou le verger ; et
déplacer le système de chauffage et de soufflage (100 ; 200) sur le champ ;
ledit procédé étant **caractérisé en ce que** le système de chauffage et de soufflage (100 ; 200) comprend un ventilateur centrifuge (106) ayant deux sorties (112 ; 116).

2. Procédé selon la revendication 1, **caractérisé en ce que** l'air chauffé est soufflé à partir du système de chauffage et de soufflage (100 ; 200) sous la forme d'un jet d'air aérodynamiquement pur, formant une poche ou couche d'air plus chaud dans la masse d'air froid.

3. Procédé selon la revendication 1 ou 2, dans lequel l'air chauffé est soufflé à partir du système de chauffage et de soufflage (100 ; 200), de sorte que celui-ci se déplace en direction essentiellement horizontale tel qu'il a été soufflé du système de chauffage et de soufflage (100 ; 200).

4. Procédé selon l'une quelconque des revendications 1 à 3, dans lequel l'air chauffé est soufflé du système de chauffage et de soufflage (100 ; 200), de sorte à créer une couche d'inversion thermique artificielle à basse hauteur, de préférence à la hauteur de fructification.

5. Procédé selon l'une quelconque des revendications 1 à 4, dans lequel le ventilateur centrifuge (106) comprend un tube de soufflage inférieur (110) se terminant en une sortie inférieure (112) pour l'air chaud et un tube de soufflage supérieur (114) se terminant en une sortie supérieure (116) pour l'air chaud, le tube de soufflage inférieur (110) et le tube de soufflage supérieur (114) étant disposés de manière à être dirigés dans des directions opposées essentiellement horizontales.

6. Procédé selon l'une quelconque des revendications 1 à 5, dans lequel l'air est chauffé par un réchauffeur à pétrole ou à gaz liquéfié (218), installé préférablement dans une entrée d'air froid (236) du système de chauffage et de soufflage (200).

7. Procédé selon l'une quelconque des revendications 1 à 6, dans lequel le système de chauffage et de soufflage (100 ; 200) est monté sur un véhicule terrestre, de préférence un tracteur (104), et/ou sur un chariot de véhicule terrestre.

8. Appareil pour mettre en oeuvre le procédé selon l'une quelconque des revendications 1 à 7, qui comprend un ventilateur (106) et un réchauffeur (118, 120 ; 218), le ventilateur (106) et le réchauffeur (118, 120 ; 218) étant montés sur un véhicule terrestre (104) ou sur une remorque pour véhicule terrestre, ledit appareil étant **caractérisé en ce que** le ventilateur est un ventilateur centrifuge (106) à deux sorties (112 ; 116).

9. Appareil selon la revendication 8, dans lequel le ventilateur centrifugé (106) comprend un tube de soufflage inférieur (110) se terminant en une sortie inférieure (112) pour l'air chaud et un tube de soufflage supérieur (114) se terminant en une sortie supérieure (116) pour l'air chaud, le tube de soufflage inférieur (110) et le tube de soufflage supérieur (114) étant disposés de manière à être dirigés dans des directions opposées essentiellement horizontales.

10. Appareil selon la revendication 8 ou 9, dans lequel le réchauffeur est un réchauffeur à gaz liquéfié ou à pétrole (218), installé préférablement dans une entrée d'air froid (236) du système de chauffage et de soufflage (200)
